Europäisches Patentamt

**European Patent Office**

Office européen des brevets

(19)

(11) Numéro de publication : **0 023 460**
**B1**

(12) **FASCICULE DE BREVET EUROPÉEN**

(45) Date de publication du fascicule du brevet :
**15.04.87**

(21) Numéro de dépôt : **80401105.4**

(22) Date de dépôt : **24.07.80**

(51) Int. Cl.⁴ : **B 60 C 17/00**, B 60 B 19/00,
B 60 B 9/00, F 16 H 55/14,
B 62 D 55/12

(54) **Nouvelle roue déformable, utilisable en particulier comme roue de véhicule ou dans un engrenage.**

(30) Priorité : **25.07.79 FR 7919137**

(43) Date de publication de la demande :
**04.02.81 Bulletin 81/05**

(45) Mention de la délivrance du brevet :
**15.04.87 Bulletin 87/16**

(84) Etats contractants désignés :
**DE FR GB IT SE**

(56) Documents cités :
**FR-A-  434 897**
**FR-A- 1 376 590**
**FR-A- 2 338 837**
**FR-A- 2 339 505**
**FR-A- 2 425 953**
**US-A- 1 428 726**
**US-A- 1 836 091**
**US-A- 3 734 157**

(73) Titulaire : **Le Feron de Longcamp, Guy**
**9, Rue Massenet**
**F-75016 Paris (FR)**

(72) Inventeur : **Le Feron de Longcamp, Guy**
**9, Rue Massenet**
**F-75016 Paris (FR)**

Jouve, 18, rue St-Denis, 75001 Paris, France

## Description

Nouvelle roue déformable, utilisable en particulier comme roue de véhicule ou dans un engrenage.

La présente invention est relative à une nouvelle roue déformable, utilisable en particulier comme roue de véhicule.

La plupart des roues de véhicule aujourd'hui sont équipées de bandages pneumatiques, c'est-à-dire qu'elles comprennent, autour du moyeu, une enceinte dans laquelle est maintenu un gaz sous pression. L'enveloppe de cette chambre comprend une bande de roulement, qui est à peu près cylindrique en l'absence de charge sur le moyeu, et qui, sous l'effet d'une charge, se déforme pour présenter, sur une partie de sa périphérie, une surface à peu près plane en contact avec le sol. Cette bande de roulement est reliée au moyeu par deux flancs, qui exercent plusieurs fonctions : ils contribuent à l'étanchéité de l'enceinte à gaz, ils limitent ses déformations dans le sens latéral, ils s'opposent à la force centrifuge qui s'exerce sur la bande de roulement, et ils contribuent, du fait de leur rigidité, à la résistance à l'écrasement sous charge. Il est facile de constater, en effet, que même lorsque la pression intérieure est nulle, une roue de voiture supporte, sans que le moyeu vienne en appui sur le sol, une charge supérieure à son propre poids, tout en étant nettement inférieure à la charge normale.

Dans des cas très limités, tels que des voitures d'enfant, la résistance des flancs peut être telle qu'aucune pression interne n'est nécessaire en service normal, mais cette solution n'apporte qu'un confort à peine supérieur à celui d'un bandage plein, et ce, pour une charge très faible. Dans la plupart des cas, au contraire, la pression qui règne à l'intérieur du pneumatique est élevée, et ce d'autant plus que la charge est importante. Il en résulte que des risques d'éclatement deviennent de plus en plus graves, et que les roues deviennent, notamment dans l'aéronautique, une cause potentielle d'accident qui doit de plus en plus être prise en considération.

On a proposé, à de nombreuses reprises, des variantes au système du pneumatique classique, de façon, en particulier, à réduire les inconvénients dus à une baisse brusque de la pression. Par exemple, on a proposé (Brevet FR 1376590) d'incorporer dans la bande de roulement des anneaux rigides et élastiques. En cas de crevaison, sous l'effet de la charge, le moyeu vient se placer excentriquement par rapport aux anneaux, et c'est donc la résistance des flancs à cette excentration qui supporte la charge. Chacun des flancs se comporte à peu près comme un disque de matière plastique dont le bord serait pratiquement indéformable, alors que le moyeu central serait soumis à des forces tendant à le déplacer en direction de la périphérie. Cette disposition présente l'inconvénient que, la bande de roulement étant rendue plus rigide, la surface plane de contact avec le sol est réduite, ce qui diminue l'adhérence.

Si on examine une roue de véhicule équipée d'un pneumatique classique : roue de voiture ou d'avion par exemple, il est évident que la pression du gaz exerce un rôle prépondérant dans le maintien de la roue à sa forme normale lorsqu'elle fonctionne sous charge. En effet, la roue cesse de fonctionner normalement avant même que la pression soit tombée à zéro.

Pour que la roue puisse fonctionner sous charge même en l'absence de pression, deux voies ont été proposées jusqu'ici. L'une d'elles consiste à renforcer les flancs de façon à augmenter leur rigidité. Lorsque le pneumatique est dégonflé, la résistance à la traction du flanc dans la partie supérieure de la roue et la résistance à la compression du flanc dans la partie inférieure de la roue agissent dans le même sens pour empêcher le moyeu de venir en appui sur la bande de roulement ou sur le sol. Cette solution, qui a été proposée notamment dans les brevets FR-A-434.897, et FR-A-2399505 et qui se rapproche de celle de la roue de voiture d'enfant à laquelle on a fait allusion plus haut, ne peut avoir que des emplois très limités.

Une autre solution, qui est celle des brevets FR-A-1376590, US-A-1345777, et US-A-1428726 consiste à augmenter la résistance propre à la déformation radiale de la bande de roulement elle-même, par exemple avec des anneaux ou une bande de renfort en métal résistant et élastique. Cette solution, comme on l'a dit plus haut, présente l'inconvénient que la surface de contact avec le sol est diminuée quand la roue est gonflée, ce qui réduit l'adhérence.

Il est clair qu'une bande de roulement rendue très rigide se déformera peu, même à l'état dégonflé, et permettra de parcourir dans cet état des distances assez longues, mais au prix d'une mauvaise adhérence à l'état normalement gonflé. Si la rigidification est faible, on aura les inconvénients et avantages opposés : faible distance parcourue à l'état dégonflé, mais adhérence moins dégradée à l'état gonflé, et si la rigidification était insuffisante le roulement à l'état dégonflé deviendrait impossible par suite de contacts entre le moyeu et le sol.

Pour résoudre le problème général de l'obtention d'une roue qui, à la fois, fonctionne essentiellement de façon non pneumatique et fournisse une grande surface d'empreinte au sol, il a été proposé dans US-A-4111249 (qui décrit les caractéristiques définies dans le préambule de la revendication 1), de partir d'un pneumatique radial de type courant, de ne pas toucher à ses flancs mais de modifier sa bande de roulement en la rendant de longueur périphérique constante tout en lui laissant une certaine flexibilité radiale. Le document précise que, de préférence, la rigidité radiale de la bande de roulement est comprise entre 10 et 100 fois la raideur des flancs. La structure présentée dans ce document a l'inconvénient de ne pas permettre un fonctionnement de longue durée : en fait cette roue ne peut guère rouler plus de 160 km environ, soit le centième de la distance parcourue par un pneumatique classique roulant à l'état gonflé.

En outre, la structure proposée ne procure pas un allègement notable par rapport au pneumatique classique.

Le but de l'invention est de fournir une roue fonctionnant essentiellement de façon non pneumatique, capable de procurer une grande surface d'empreinte au sol, et qui puisse rouler sur des distances importantes avant d'être hors d'usage, cette roue étant en outre éventuellement capable de procurer un allègement appréciable.

Pour atteindre ce but, l'invention, dans un premier aspect, fournit une roue telle que décrite à la revendication 1.

Dans un second aspect, l'invention fournit une roue sans moyeu telle que décrite à la revendication 4.

Le concept inventif qui est à l'origine de l'invention, sous ces deux aspects, est de faire appel aux forces de tension radiale des flancs ou moyens de liaison diamétraux comme moyens prépondérants de résistance de la roue aux forces tendant à son affaissement sous charge. Il en résulte que la résistance de la bande de roulement aux forces radiales peut être pratiquement aussi faible qu'on le veut, d'où une grande souplesse possible de la roue dans son ensemble. Il en résulte aussi que, comme l'expérience l'a montré, les tensions dans les flancs nécessaires au maintien de la roue en état de marche sont normalement supérieures à celles qui sont nécessaires pour soutenir la charge du moyeu, si bien que le comportement « moyeu suspendu » est écarté.

Enfin, le faible allongement des flancs, dans le cas d'une roue à moyeu, réduit considérablement les contraintes alternées pendant la marche, et par suite il est un facteur favorable en ce qui concerne les performances de durée et/ou de vitesse.

L'invention va maintenant être exposée plus en détail, en s'aidant des dessins parmi lesquels :

Figure 1   est un schéma simplifié d'un exemple de roue selon l'invention, vue de face.

Figure 2   est une coupe d'une roue selon l'art antérieur, à gauche au repos et à droite dégonflée sous charge.

Figure 3   est une vue en coupe analogue à celle de la figure 2, mais relative à un exemple de roue selon l'invention.

Figure 4   est une vue d'une roue selon l'invention utilisée en tant que « pignon souple ».

Figure 5   est une vue d'une roue selon l'invention, sans moyeu, utilisée en tant que « pignon satellite souple ».

Figure 6   est une demi-vue en coupe de la réalisation de l'exemple 1.

Figure 7   est la représentation de la courbe de déformation sous charge de la roue de l'exemple 1.

Figure 8   est une demi-vue en coupe de la réalisation de l'exemple 2.

Figure 9   est la représentation des courbes de déformation sous charge des exemples 2 et 3.

Figure 10   est une demi-vue en coupe de la réalisation de l'exemple 3.

Figure 11   est une demi-vue en coupe de la réalisation de l'exemple 4.

Figure 12   est la représentation de la longueur d'empreinte sous charge de l'exemple 4.

Figure 13   est une demi-vue en coupe de la réalisation de l'exemple 5.

Figure 14   est la représentation de la déformation sous charge de l'exemple 5.

Figure 15   est une réalisation de l'exemple 6.

Figure 16   est une demi-vue en coupe de la réalisation de l'exemple 6.

Sur les fig. 7, 9, 14, on désigne par déformation D, la différence entre le rayon d'une roue non chargée et la hauteur de son axe au-dessus de la surface d'appui lorsque la roue est chargée.

La roue selon l'invention présente une combinaison de propriétés particulières relatives à la bande de roulement et aux moyens de liaison du moyeu à ladite bande de roulement, moyens qui seront désignés dans la suite par les mots « flancs » alors que dans certains cas il peut ne pas s'agir véritablement de flancs au sens usuel.

La bande de roulement doit être à la fois déformable dans le sens radial et de longueur sensiblement constante. Un exemple extrême de surface de roulement répondant à cette définition est la chenille dont sont équipés certains véhicules tous terrains. Dans le domaine des transmissions mécaniques, on peut citer aussi les chaînes de transmission. Les bandes de roulement des pneumatiques à carcasse diagonale ne répondent pas à cette définition, car elles sont formées de caoutchouc armé de câbles placés obliquement, et, de ce fait, elles peuvent subir des variations de longueur importantes.

Les bandes de roulement de pneumatiques de type à ceinture, notamment ceux à carcasse radiale, comprennent des nappes de câbles qui font un angle faible avec un plan perpendiculaire à l'axe de la roue, sont plus proches de la définition ci-dessus, en particulier si les câbles sont métalliques. En revanche, les bandes de roulement telles que celles du brevet FR 13766590, évoqué plus haut, ne sont pas déformables et ne répondent donc pas à cette définition.

En ce qui concerne les flancs, si on les compare avec ceux d'un pneumatique courant, quelle que soit sa carcasse, on constate ce qui suit : dans un pneumatique courant gonflé, au repos, le flanc a, en coupe, la forme d'un arc de cercle bombé vers l'extérieur, et prenant appui sur la jante d'un côté et sur la bande de roulement de l'autre. En charge, le flanc a une courbure plus accusée dans la partie de la roue en contact avec le sol, et moins accusée de l'autre côté. Si le pneumatique est dégonflé, sa forme est à peu près la même au repos, mais sous charge, il s'écrase, c'est-à-dire que, dans la partie de la roue qui est en contact avec le sol, le flanc est pincé entre la jante et la bande de roulement, et dans la partie opposée de la roue, le flanc garde à peu près la même forme d'arc de cercle avec une variation limitée de sa courbure.

3

Il est clair qu'un tel flanc ne transmet par lui-même, en l'absence de pression du pneumatique, qu'une charge très faible entre le moyeu et la bande de roulement, cette charge ne correspondant pratiquement qu'à la résistance qu'il oppose à une déformation lui donnant, en coupe, la forme d'une courbe fermée ou presque fermée dont on vient de parler.

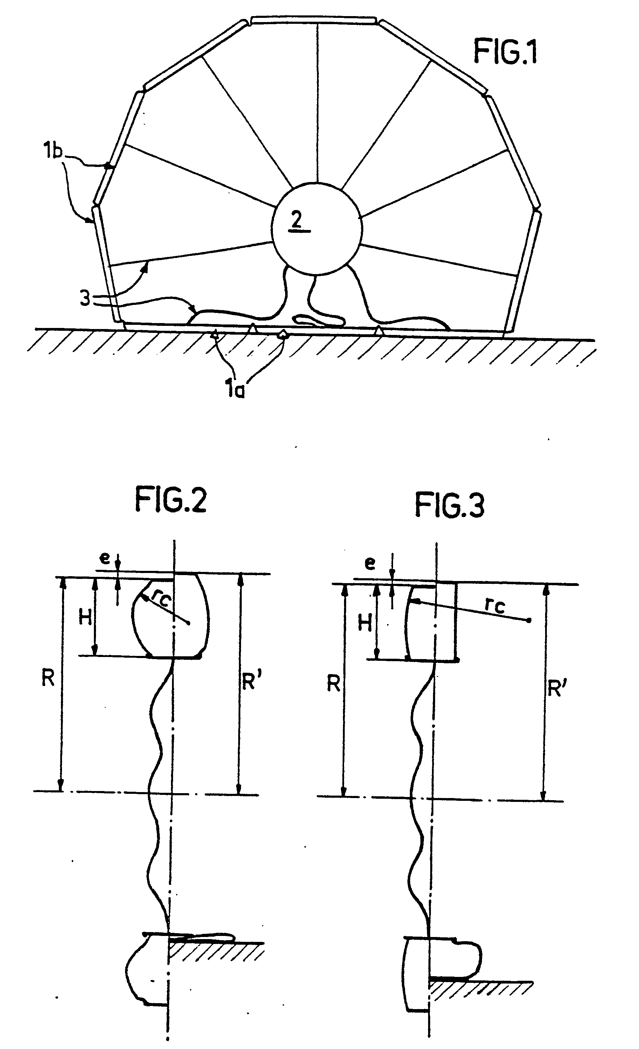

Pour bien montrer la différence entre un tel flanc et celui de l'invention, on s'aidera de la figure 1 qui représente le cas théorique d'une chenille, formée d'un certain nombre d'éléments rigides 1, reliés au moyeu 2 par un câble 3 de même longueur ; pour rendre la figure plus lisible, on a représenté sur celle-ci un nombre d'éléments extrêmement faible ; des moyens non représentés empêchent les éléments de se disposer en formant un angle rentrant, si bien que ces éléments dessinent toujours un polygone convexe. Sous charge, certains éléments 1a se disposent à plat sur le sol, alors que d'autres, 1b se disposent suivant un cercle dont le rayon est égal à la longueur d'un câble augmentée du rayon du moyeu. Il y a en outre, éventuellement, des éléments (non représentés) toujours en petit nombre, dans une position où ils forment la transition entre les éléments 1a et 1b. Les câbles relatifs aux éléments 1a ne sont pas tendus.

Pour que le moyeu ne touche pas la bande de roulement, il est clair que le rapport de la longueur L de celle-ci et la longueur P des câbles doit être compris entre certaines limites : si $L/p = 2\pi$, tous les câbles sont constamment tendus, la roue est rigide et la surface de contact avec le sol est nulle ou réduite à la longueur d'un élément au maximum. Si $L/p = \pi + 2$, la courbe formée par la bande de roulement est constituée par un demi-cercle et d'un de ses diamètres, et le moyeu, même s'il a un rayon nul, est en contact avec le sol. Entre ces deux limites, l'axe du moyeu est à une certaine hauteur au-dessus du sol. Ce qu'on vient de dire suppose que le moyeu a un rayon nul.

Il est possible de concevoir une roue correspondant au schéma de la figure 1 éventuellement pour un véhicule (cependant, dans ce cas, elle manquerait de souplesse) mais plutôt dans un système de transmission : en prévoyant des dents d'engrenage sur la bande de roulement, ou bien en la constituant comme une chaîne à rouleaux, on obtient ainsi un pignon qui peut transmettre un mouvement à une denture rectiligne ou curviligne remplaçant le sol. L'avantage d'un tel dispositif est de permettre d'avoir un grand nombre de dents simultanément en prise pour un encombrement transversal réduit.

Si on désire utiliser une roue selon les principes de l'invention comme roue de véhicule, soumise à des constantes variations de charge, il convient de l'adapter en s'écartant un peu du schéma très simple de la figure 1. En effet, avec la roue selon ce schéma, la roue étant supposée circulaire au repos, tous les câbles étant détendus, elle n'opposera aucune résistance appréciable à la déformation sous une charge croissante jusqu'au moment où elle atteindra la forme décrite et, à ce moment, elle opposera au contraire une résistance très forte correspondant à la résistance de la déformation propre des éléments 1b et à la résistance à l'allongement des câbles 3 correspondants.

Pour les charges inférieures à la charge limite, il est possible d'augmenter la résistance à la déformation de la roue par exemple en remplaçant les câbles, qui sont parfaitement flexibles, par des flancs élastiques galbés, et dont la mise sous tension se fait de façon relativement progressive.

De même, on peut remplacer la chenille par une surface continue, par exemple une tôle ou un feuillard, qui oppose une certaine résistance élastique à la déformation, si bien que, notamment, le raccordement entre la partie plane et la partie circulaire se fait non par un angle vif mais des arrondis plus ou moins accusés. D'autre part, la bande de roulement peut également être déformable si on considère sa section par un plan passant par l'axe de la roue.

Ces modifications font que la courbe de déformation, ou de la distance du moyeu au sol, en fonction de la charge, n'est plus formée de deux parties formant entre elles un angle droit comme dans le cas de la figure 1, mais présente une allure beaucoup plus arrondie. L'essentiel ne réside pas dans la forme de la courbe, mais dans le fait qu'en charge, le moyeu est, en quelque sorte, suspendu à la partie circulaire de la bande de roulement au lieu d'être porté par la partie plane.

Dans une variante, pour obtenir une variation progressive de la résistance à la déformation, il est possible de prévoir une chambre à air sous pression relativement faible qui agit d'une part en donnant une certaine courbure aux flancs, courbure qui devient très faible quand la charge augmente, et qui agit d'autre part pour limiter la déformabilité de la bande de roulement. Il doit cependant être bien entendu que cette chambre à air n'a pas le même rôle que dans un pneumatique traditionnel, elle sert seulement à modifier la courbe de l'écrasement en fonction de la charge, la roue pouvant être utilisée même si la pression est nulle.

Dans une autre variante, il est possible de prévoir une rigidité des flancs qui permette d'une part de transmettre une certaine part des efforts par la partie des flancs correspondant à la partie aplatie de la bande de roulement, d'autre part et surtout de maintenir en contact avec le sol la totalité de la partie de la bande de roulement qui doit l'être. Ceci peut être utile lorsque l'on recherche une très grande surface de contact pour limiter les pressions locales.

Pour préciser encore les différences entre une roue de type classique et une roue selon l'invention, on peut faire observer que, dans un pneumatique courant au repos, les flancs ont, en section, à peu près la forme d'un arc de cercle de rayon de courbure r compris habituellement entre 0,6 H et 0,75 H, H désignant la hauteur du flanc, c'est-à-dire la distance, comptée sur une perpendiculaire à l'axe de la roue, entre la bande de roulement et le moyeu. Une mise sous tension du flanc correspondrait au passage de cette configuration en arc de cercle à une configuration rectiligne. Le flanc deviendrait alors plan. Ceci correspond à un allongement des flancs, qui passerait à une hauteur $H + e$, où e, qui représente l'allongement du flanc, est de l'ordre de 10 à 18 % de H.

On peut observer d'autre part que, si une telle roue classique est dégonflée sous charge, le moyeu repose sur le sol, et la surface de roulement présente, comme dans le cas de la fig. 1, la forme d'une courbe composée d'une droite et d'un arc de cercle. Si on appelle R le rayon de la roue au repos, et R' le rayon de la partie circulaire de la roue dégonflée, et 2P l'angle au centre de la partie rectiligne, la constante de la longueur de la bande de roulement est exprimée par l'équation : $\pi R = R' (\pi - P + \sin P)$ et le fait que le moyeu touche le sol est exprimé par $R - H = R' \cos P$, H étant bien entendu la hauteur du flanc au repos.

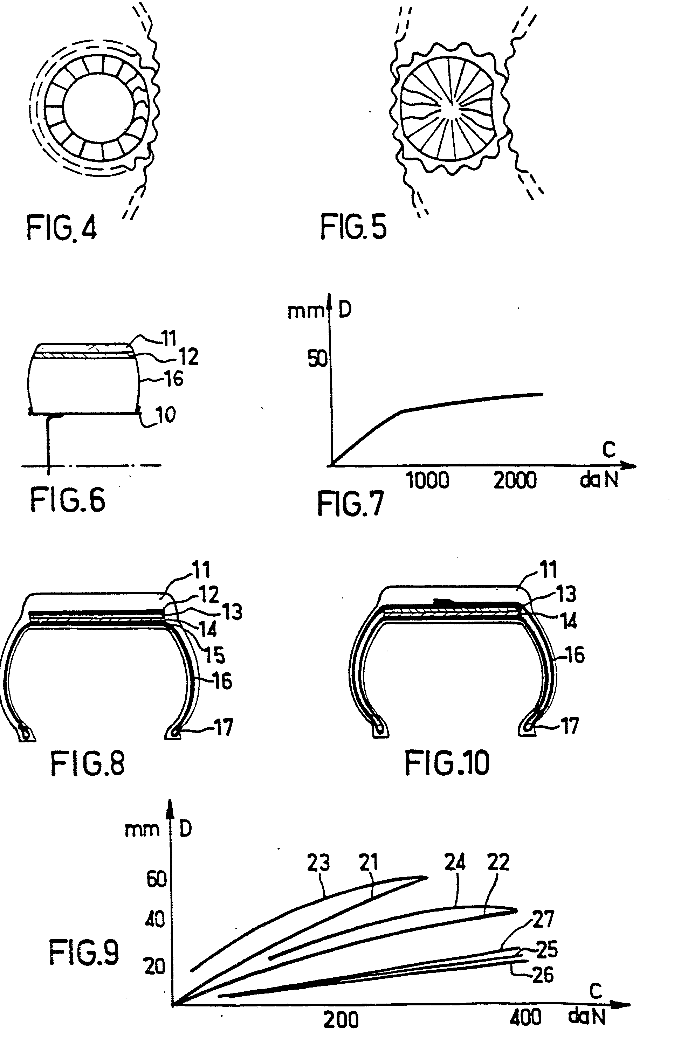

Pour une valeur classique de $R - H = 0,65 R$, l'allongement du rayon $R' - R$ est sensiblement égal à 0,036, c'est-à-dire $H \times 10,3 \%$. Si on compare cet allongement avec l'allongement e qui correspond à la mise en tension du flanc, on constate que, dans la plupart des cas, le moyeu a touché le sol avant que le flanc ait pu se mettre en tension, cf. fig. 2, et que dans la condition la moins défavorable, il se met tout juste en tension au moment où le moyeu touche le sol. En aucun cas, le flanc n'est en possibilité de soulever, par sa tension, le moyeu sensiblement au-dessus du sol.

Des calculs simples montrent que, dans les hypothèses ci-dessus, si l'on désire que, sous charge, le moyeu soit à une hauteur au-dessus du sol au moins égale à la moitié de la hauteur H du flanc au repos, le rayon de courbure r du flanc doit être au moins égal à 1,5 H.

Bien entendu, les calculs pratiques sont bien plus complexes et font intervenir, en particulier la compressibilité de la bande de roulement dans le sens de sa longueur, l'allongement sous tension du flanc et la flexion de la surface de roulement dans un plan axial. On peut cependant retenir que, dans une roue selon l'invention, pour une hauteur de flanc H liée au rayon R de la roue au repos, pour $R - H = 0,65 R$, le rayon de courbure r du flanc doit être supérieur à 0,75 H, et de préférence supérieur à 1,5 H. Pour une hauteur de flanc H plus faible par rapport au rayon R de la roue, le rayon de courbure r devra être plus grand par rapport à H et vice-versa.

On voit qu'il est possible de fabriquer une roue de véhicule selon l'invention en utilisant des techniques proches de celles qui sont actuellement en usage dans l'industrie automobile ou aéronautique, les différences portant principalement sur les points suivants :

— le bandage est analogue à un pneumatique actuel, mais avec les flancs presque plats, ou même complètement plats si l'on peut jouer sur leur allongement propre ;

— la bande de roulement a une rigidité très grande dans un sens axial (parallèle à celui de l'axe de la roue). En effet, si on se reporte à la fig. 3, on voit que si la bande de roulement s'incurve sous charge, il en résulte un abaissement du moyeu vers le sol ;

— l'accrochage des flancs avec le moyeu doit être conçu pour transmettre les forces de traction correspondant à la charge ;

— en outre, la chambre à air peut être supprimée.

Une roue selon l'invention peut aussi être réalisée suivant des techniques très différentes, et par exemple, la roue-chenille dont la fig. 1 donne un schéma très simplifié, peut être réalisée en prévoyant diverses modalités, notamment dans les moyens de liaison entre la bande de roulement articulée et le moyeu, pour obtenir des relations entre la charge appliquée, la contrainte de traction et la déformation suivant des lois choisies à l'avance. Par exemple, on peut doubler chacun des câbles prévus à la fig. 1 par un ressort travaillant à la traction dans le domaine où le câble n'est pas tendu, et un ressort plus puissant travaillant en série avec le câble lui-même. Sur la fig. 1 on a dessiné, pour simplifier, 10 éléments, mais ce nombre, dans la pratique, est beaucoup plus important, le nombre de câbles pouvant d'ailleurs être différent de celui des éléments. On peut associer ainsi la souplesse d'une roue à pneumatique avec la résistance et la robustesse d'une chenille.

Une autre application de la roue selon l'invention se trouve dans le domaine des engrenages. Si l'on prévoit sur la bande de roulement des dents ou autres moyens susceptibles d'engrener avec une autre roue ou une crémaillière, on réalise un pignon qui présente la particularité, cf. fig. 4, d'avoir un nombre de dents en prise qui est bien supérieur à celui d'un pignon de type classique, pour un encombrement sensiblement le même. Le « pignon souple » selon l'invention peut coopérer avec un pignon de type classique, ou même simultanément avec plusieurs pignons classiques. Il peut aussi coopérer avec une ou plusieurs crémaillières, avec un ou plusieurs « pignons souples » de même type, avec une chaîne. Par rapport aux pignons classiques, il offre toujours l'avantage d'un plus grand nombre de dents en prise ce qui permet de transmettre des forces plus importantes. Cet avantage, jusqu'ici, était obtenu par des transmissions à chaîne, mais celles-ci exigent de façon générale un espace plus important.

On observe que le « pignon souple » peut être conçu à la manière d'une roue caoutchoutée de véhicule, les « dents » étant constituées par des sculptures de la bande de roulement. Une construction plus robuste, quoique moins silencieuse, est obtenue en plaçant les dents sur les éléments de roulement d'une roue de type « roue-chenille ». On peut encore fixer directement les dents sur la face extérieure d'une bande de roulement formée d'un feuillard ou analogue. Dans certains cas, une adhérence suffisante peut être obtenue sans que des dents soient prévues.

On peut aussi être amené à utiliser une roue selon l'invention sans appliquer de charge au moyeu et même sans réaliser de moyeu. La roue, cf. fig. 5, a alors deux zones d'appui sur des surfaces extérieures, zones qui sont diamétralement opposées. Entre ces zones, la bande de roulement prend la forme circulaire, et si les flancs sont composés de câbles indépendants, on observe que ceux-ci forment des diamètres. On peut aussi imaginer des zones d'appui en plus grand nombre. Si la surface de roulement comporte des dentelures, on réalise ainsi un « pignon satellite souple » et si la surface est cylindrique on réalise un « rouleau souple ».

Dans un autre genre d'application de l'invention, la bande de roulement dépourvue de dents coopère avec une courroie qui peut être plate ou trapézoïdale, la bande de roulement étant elle-même plate ou formant une gorge. On crée ainsi une « poulie souple », qui présente la particularité que son axe peut se déplacer dans des limites assez larges par rapport à la courroie, la tension de celle-ci variant de façon correspondante. Pour un même encombrement, elle offre l'avantage d'avoir par rapport à la poulie souple une longueur plus grande de contact avec la courroie et une plus grande souplesse de fonctionnement. A la différence des poulies à diamètre variable utilisées, par exemple, dans certains variateurs de vitesse, le rapport des vitesses de la courroie et de la roue ne varie pas, car il est lié à la longueur de la bande de roulement.

On va décrire maintenant quelques exemples particuliers, et non limitatifs, de réalisations pratiques.

Exemple 1 cf. fig. 6 et 7.

La bande de roulement de diamètre extérieur au repos de 615 mm est constituée d'une bande en caoutchouc 11 et d'une partie 12 résistante à la compression, d'épaisseur totale 3 mm formée par plusieurs enroulements d'un feuillard en acier de largeur 225 mm. Le moyeu 10 est constitué de flasques coaxiaux de diamètre 250 mm reliés entre eux solidairement et espacés de 225 mm. Les flancs 16 sont constitués par une nappe de câbles métalliques isolés, passant dans la surface de roulement entre la bande de caoutchouc et le feuillard et joignant à la façon d'arceaux radiaux les flasques du moyeu auxquelles leurs extrémités ont été rendues solidaires : la longueur de chaque câble enfermé entre les flasques est de 584 mm.

Des mesures faites sur un modèle réduit de cette roue, de diamètre 250 mm, ont donné les résultats suivants :

| Ecrasement (mm) | 2 | 5 | 10 | 15 | 20 | 25 |
|---|---|---|---|---|---|---|
| Charge(Newton) | 20,4 | 62 | 177 | 355 | 590 | 754 |

La courbe de la figure 7 a été enregistrée lors des mêmes essais. On remarque sur cette figure que la courbe de déformation se compose de deux parties rectilignes, la première partie de pente forte correspond essentiellement à la déformation de la bande de roulement, le point d'inflexion correspond à la mise sous tension de tous les câbles joignant la zone curviligne de la bande de roulement et la seconde partie, de pente faible, correspond à la déformation élastique de tous les éléments de la roue.

Une réalisation de ce genre est particulièrement adaptée à la réalisation :

1) de roues d'avion et de voiture de compétition en remplacement des pneumatiques qui sont sujets à des éclatements, par suite d'accident ou d'échauffement excessifs dus à l'hystérésis de déformation, la roue selon cette réalisation a d'une part une hystérésis plus faible, d'autre part, elle offre la possibilité de créer, par un artifice adapté, un courant d'air interne de refroidissement étant donné l'absence de gaz sous pression.

2) de roues de véhicule de combat en remplacement des pneumatiques qui peuvent être mis hors d'état de fonctionner sous l'effet de tir de fusils.

3) de roues d'objets dont l'utilisation s'accommode mal d'une résistance à l'avancement et de la contrainte de gonflage et de vérification de pression tels que voitures d'enfant, poussettes diverses, engins de chantiers, roues de bicyclettes.

4) d'une façon générale, de toute roue pour laquelle une surface de contact avec le sol est une caractéristique nécessaire ou intéressante et pour laquelle la présence de gaz sous pression est très contraignante, diminue la sécurité, limite les longueurs de la surface en contact avec le sol.

Exemples 2 et 3 cf. fig. 8, 9 et 10.

La bande de roulement de diamètre extérieur au repos de 590 mm est constituée d'une bande en caoutchouc 11 et d'une partie résistante à la compression de largeur 140 mm constituée de plusieurs nappes de câbles métalliques parallèles entre eux et noyés dans du caoutchouc. Par rapport aux plans contenant l'axe de la roue, les nappes 12 et 15 font un angle de 0°, les nappes 13 et 14 croisées entre elles, un angle de 82°. A noter que la réalisation 3 de la fig. 10 ne comporte pas les nappes 12 et 15. Les flancs 16 sont constitués par une nappe de câbles noyés dans du caoutchouc et viennent entourer comme dans un pneumatique des tringles 17 enfermant des « talons ». Dans la réalisation de la figure 8 les câbles sont en rayonne et remontent peu dans les flancs après enroulement autour des tringles tandis que dans la réalisation de la fig. 9 les câbles sont en acier, remontant dans les flancs et leurs extrémités se chevauchent au-dessus de la nappe 13 de la bande de roulement.

Le rayon de courbure moyen des flancs est de 200 mm. Leur hauteur est de : 120 mm. Le moyeu est constitué par une roue de pneumatique. Un serrage important des « talons » sur la jante permet une solidarité suffisante de la roue avec la jante. Sur la figure 9, respectivement pour les exemples 2 et 3, les courbes 21 et 22 représentent les déformations sous charge des roues sans gaz sous pression à l'intérieur, les courbes 23 et 24, celles obtenues lorsque l'on diminue les charges.

Des mesures faites lors des mêmes essais ont donné les résultats suivants :

| ecrasement (mm) | 10 | 20 | 30 | 40 | 50 | 60 | 70 |
|---|---|---|---|---|---|---|---|
| exemple 2 charges croissantes (da N ) | 20 | 46 | 78 | 120 | 180 | 256 | 290 |
| Charges décroissantes (da N ) | - | 15 | 44 | 64 | 88 | 130 | 215 |
| exemple 3 charges croissantes (da N ) | 90 | 148 | 205 | 264 | 324 | 386 | |
| charges décroissantes (da N ) | - | 90 | 128 | 190 | 225 | 350 | |

On remarque la forme curviligne des courbes à concavité sur le bas, la diminution progressive de leur pente et l'importance de l'hystérésis qui est représentée par la surface enfermée entre les courbes 21 et 23, 22 et 24. L'hystérésis correspondant à l'énergie absorbée au cours de la déformation est due aux propriétés du caoutchouc dont est constituée la partie résistante de la bande de roulement, propriétés qui ne sont pas compensées comme elles le sont, pour une bonne part, dans un pneu par l'action du gaz sous pression. Les courbes 25 et 26 sont les déformations sous charge des roues des exemples 2 et 3 gonflées à la pression de 1 bar ; on retrouve l'allure rectiligne des courbes de déformation des pneus et on constate que leur résistance à la déformation est supérieure à celle du pneu de même dimension type 590-13 gonflé à 1,9 bar représentée par la courbe 27.

Des réalisations selon ce type permettent de cumuler les avantages du pneumatique et la sécurité inhérente aux roues selon l'invention, elles permettent aussi de réaliser des structures qui absorbent beaucoup d'énergie. La réalisation de l'exemple 2 est un pneu basse pression avec, de ce fait, des risques plus limités d'éclatement, et qui possède la caractéristique particulière de pouvoir continuer à fonctionner en l'absence de gaz sous pression, et cela sans que les flancs soient pincés entre la jante et la surface de roulement. Cette réalisation est particulièrement adaptée à l'automobile et à tout ce qui s'y rattache.

La réalisation de l'exemple 3, outre l'application précédente, est adaptée aux véhicules destinés à rouler en terrain meuble, aussi à ceux devant rouler à grande vitesse sur des chaussées adaptées et à vitesse réduite sur des terrains non aménagés ; en effet, avec un gaz sous pression, les caractéristiques de la roue sont voisines de celles du pneumatique, et en l'absence de gaz sous pression, on obtient une plus grande surface de contact avec le sol. Pour des véhicules de combat, on peut imaginer une chambre à air qui, en l'absence de gaz sous pression, se replie à l'intérieur de la roue et est ainsi protégée de l'action des balles.

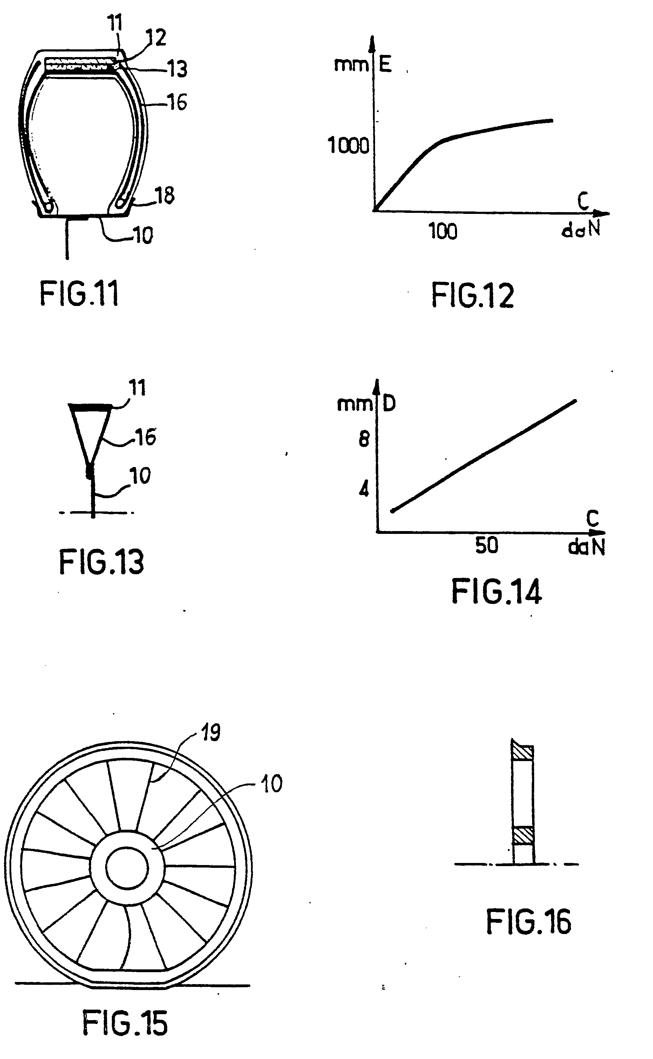

Exemple 4 cf. fig. 11 et 12.

La bande de roulement de diamètre extérieur au repos 1 500 mm est constituée d'une bande en caoutchouc 11 et d'une partie résistante constituée de plaquettes métalliques rectangulaires 12 de 200 × 50 mm et d'une nappe 13 de câbles métalliques obtenue par enroulement. Les flancs 16 sont constitués par une nappe de câbles métalliques noyés dans du caoutchouc qui entoure comme dans un pneumatique des tringles de talon. Des vis 18 traversent les tringles et permettent une fixation solide à la roue 10 de diamètre 500 mm. Le rayon de courbure des flancs est de 500 mm.

La courbe de la figure 12 représente la longueur E de l'empreinte au sol en fonction de la charge C appliquée à la roue. Cette réalisation est particulièrement intéressante pour des roues de véhicule devant se déplacer sur des terrains très meubles et présente l'avantage de simplifier la conception des véhicules. En effet, l'empreinte croît très vite sous de faibles charges comme on peut le constater sur la courbe de la fig. 12.

Exemple 5 cf. fig. 13 et 14.

La bande de roulement de diamètre extérieur au repos de 150 mm, de largeur 20 mm, et d'épaisseur 10 mm est composée de mélange de caoutchouc 11 contenant des charges nombreuses et de grosses dimensions lui conférant un module en compression de 20 daN par mm. Les flancs 16 joignent les bords de la bande de roulement au moyeu 10 situé dans le plan de symétrie perpendiculaire à l'axe de la roue, et adhèrent à ces éléments.

Chaque flanc est constitué d'une nappe de caoutchouc renforcé d'épaisseur 2 mm, de module à la tension 2 daN et forme un tronc de cône. Sur la fig. 14 on observe que la courbe de déformation a la forme d'une droite qui ne passe pas par l'origine.

Cette réalisation de fabrication particulièrement simple est bien adaptée à des utilisations dont les charges sont limitées et peut avantageusement remplacer des bandages pleins en apportant des caractéristiques de confort et de diminution de bruit.

Exemple 6 cf. fig. 15 et 16.

La bande de roulement en acier est reliée au moyeu 10 par des lames en acier 19 qui forment toutes des rayons lorsque la roue n'est pas chargée. A la déformation de la bande de roulement correspond un allongement de celles des lames 19 qui sont sous tension et un flambage des autres. La courbe de déformation d'une telle roue est également très proche d'une courbe rectiligne ne passant pas par l'origine.

Cette réalisation est particulièrement intéressante pour des roues devant supporter de très fortes charges et pour les roues se déplaçant sur des rails de guidage. Une roue selon l'invention a l'avantage par rapport à une roue rigide de même dimension d'améliorer le confort et d'avoir une surface de contact qui accroît l'adhérence de la roue à son support.

**Revendications**

1. Roue déformable comprenant :
   — un moyeu rigide (2, 10),
   — une bande de roulement (1, 11-15) déformable dans le sens radial mais de longueur périphérique sensiblement constante,
   — des éléments de liaison (3, 16, 19) reliant le moyeu à la bande de roulement, ces éléments étant capables de s'allonger radialement en se mettant en tension lorsque la_roue est mise en charge, mais n'opposant qu'une faible résistance à une compression radiale,
   — des moyens capables de maintenir la pression gazeuse à l'intérieur de la roue à une valeur égale ou seulement très peu supérieure à la pression extérieure,
   — des moyens permettant à la roue de fonctionner lorsque la pression gazeuse est à ladite valeur, caractérisée en ce que lesdits moyens permettant à la roue de fonctionner lorsque la pression gazeuse est à ladite valeur sont constitués par le fait que l'allongement radial desdits éléments de liaison (3, 16, 19) lors de leur mise en tension correspondant à la mise en charge de la roue est inférieure au dizième de leur longueur radiale au repos.

2. Roue selon la revendication 1, et dans laquelle les éléments de liaison sont constitués par une surface continue pourvu d'éléments de renfort radiaux, et à section transversale rectiligne ou convexe vers l'extérieur, caractérisé en ce que le rayon de courbure du flanc est au moins égal à 1,5 fois la hauteur dudit flanc.

3. Roue selon la revendication 1 caractérisée en ce que les flancs sont constitués par une nappe de câbles isolés les uns des autres.

4. Roue déformable sans moyeu, comportant une bande de roulement flexible dans le sens radial, mais de longueur périphérique sensiblement constante, caractérisée en ce qu'elle comprend des éléments de liaison reliant chacun une première partie de la bande de roulement à une seconde partie de la bande de roulement sensiblement diamétralement opposée à la première, la longueur diamétrale de ces éléments de liaison, lorsqu'ils sont sous une tension résultant de la mise en charge de la roue, étant comprise entre $L/\pi$ et $2 L/(\pi + 2)$, L étant la longueur de la bande de roulement.

5. Roue selon l'une des revendications 1 à 4, caractérisée en ce que la bande de roulement constitue une « chenille » formée d'éléments articulés entre eux.

6. Roue selon l'une des revendications 1 à 5, et destinée à fonctionner à la manière d'un pignon dans un engrenage, caractérisée en ce que la bande de roulement porte à sa périphérie des moyens tels que des dents, destinées à coopérer avec d'autres dents de l'engrenage.

## Claims

1. Deformable wheel comprising :
— a rigid hub (2, 10),
— a tread (1, 11-15) which is radially deformable, but whose periphery is substantially constant in length,
— connecting means (3, 16, 19) which connect the hub to the tread, those means being able to radially stretch when being tensionned as the wheel being loaded, but resisting only weakly to a radial compression,
— means able to maintain the gaz pressure inside the wheel to a value equal or slightly higher than the outside pressure,
— means which allow the wheel to operate as the gaz pression is at the said value,
characterized in that said means which allow the wheel to operate as the gaz pressure is at the said value, consist of the fact that the radial stretching of the said connecting means (3, 16, 19) when tensionned as the wheel is loaded is less than one tenth of the radial length when unstretched.

2. Wheel according to claim 1, and wherein the connecting means consist of a continuous surface comprising radial reinforcing members and having a transversal cross-section which is rectilinear or convex to the outside
characterized in that, the radius of curvature of this surface is at least equal to 1,5 times the height of the said surface.

3. Wheel according to claim 1 characterized in that the connecting means consist of a layer of cables which are separated from each others.

4. Deformable hubless wheel, comprising a tread which is radially flexible, but whose periphery is substantially constant in length, characterized in that it comprises connecting means, each of those connects a first portion of the tread to a second one which is substantially diametrally opposed to the first one, the diametral length of the connecting means, when stretched consequently to the loading of the wheel, being comprised between $L/\pi$ and $2L/(\pi + 2)$, where L is the peripheral length of the tread.

5. Wheel according to claims 1 to 4, characterized in that the tread forms a linkbelt consisted of elements hinged one to the next ones.

6. Wheel according to claims 1 to 5, intended for operating like a pinion in a gearing, characterized in that the tread comprises at its periphery means such as cogs in order to cooperate with other cogs of other gear wheels.

## Patentansprüche

1. Verformbares Rad, mit :
— einer starren Nabe (2, 10)
— einem in radialer Richtung verformbaren, jedoch von wesentlich beständiger Umkreislänge Rollenband (1, 11-15) ;
— Verbindungsmitteln (3, 16, 19), die die Nabe mit dem Rollenband verbinden, wobei sich diese Verbindungsmitteln radial mit Spannung verlängern, wenn das Rad aufgeladen wird, aber einem radialen Druck nur leicht widerstehen ;
— Mitteln, die dazu fähig sind, den Gasdruck im Inneren des Rads auf einem gleichen oder wenig höheren Wert als dem äußeren Druck aufrechtzuerhalten ;
— Mitteln, die das Funktionieren des Rads ermöglichen, wenn der Gasdruck diesem Wert entspricht ;
dadurch gekennzeichnet, dass die vorangehenden Mittel die das Funktionieren des Rads ermöglichen wenn der Gasdruck dem vorangehenden Wert entspricht, aus der Tatsache bestehen, dass die radiale Verlängerung der Verbindungsmitteln (3, 16, 19), wenn sie beim Aufladen des Rads verspannt werden, weniger als ein Zehntel ihrer radialen Länge ohne Spannung ist.

2. Rad nach Anspruch 1, wobei die Verbindungsmitteln aus einer mit radialen Verfestigungen und einem gerade oder nach aussen Konvexen Durchschnitt versehenen ununterbrochenen Oberfläche bestehen, dadurch gekennzeichnet, dass der Krümmungsradius der Fläche wenigstens 1,5 mal der Höhe dieser Fläche entspricht.

3. Rad nach Anspruch 1, dadurch gekennzeichnet, dass die Verbindungsmitteln aus einem Netz von auseinander isolierten Kabeln bestehen.

4. Verformbares Rad ohne Nabe, mit einem in radialer Richtung verformbaren, jedoch von wesentlich beständiger Umkreislänge Rollenband, dadurch gekennzeichnet, dass es Verbindungsmitteln umfasst, die jeder einen ersten Teil des Rollenbands verbinden wobei diese Verbindungsmitteln, wenn sie beim Aufladen des Rads verspannt werden, eine Diametrallänge haben, die zwischen $L/\pi$ und $2L/(\pi + 2)$ liegt, wobei L die Länge des Rollenbands darstellt.

5. Rad nach einem der Ansprüche 1-4, dadurch gekennzeichnet, dass das Rollenband eine Raupenkette ist, die aus gelenkig miteinander verbundenen Teilen besteht.

6. Rad nach einem der Ansprüche 1-5 und, das dazu bestimmt ist, wie ein Zahnrad in einem Getriebe zu arbeiten, dadurch gekennzeichnet, dass das Rollenband Mittel wie Zähne an der Oberfläche trägt, die dazu bestimmt sind, mit anderen Zähnen des Getriebes zusammenzuwirken.

0 023 460

FIG.1

1b

2

3

1a

FIG.2          FIG.3

e                e

rc               rc

H                H

R       R'       R       R'

FIG.4

FIG.5

FIG.6

FIG.7

FIG.8

FIG.10

FIG.9

**FIG.11**

**FIG.12**

**FIG.13**

**FIG.14**

**FIG.15**

**FIG.16**

3